# EUROPEAN PATENT SPECIFICATION

(11) **EP 0 959 718 B1**
(45) Date of publication and mention of the grant of the patent: **02.11.2000**
(21) Application number: 96941670.0
(22) Date of filing: 10.12.1996
(51) Int. Cl.: A46B 11/02, A61C 17/22

(54) **TOOTHBRUSH WITH PUMP**
ZAHNBÜRSTE MIT EINER PUMPE
BROSSE A DENTS MUNIE D'UNE POMPE

(30) Priority: 15.12.1995 FI 956061
(43) Date of publication of application: 01.12.1999
(73) Proprietor: Puurunen, Juha-Pekka, 25500 Perniö (FI)
(72) Inventor: Puurunen, Juha-Pekka, 25500 Perniö (FI)
(74) Representative: Öhman, Ann-Marie
(86) International application number: PCT/FI96/00653
(87) International publication number: WO 97/22281

(56) References cited:
- US-A- 4 963 046
- US-A- 5 393 153

## Description

The present invention relates to a pump toothbrush comprising a brush portion, a grip portion and an intermediate arm portion, whereby the grip portion comprises a container portion for a cleansing medium, said container portion is connected with the brush portion by means of a pump device in order to feed the cleansing medium into the brush portion through the arm portion.

Toothbrushes of this type are disclosed, for example, in US-applications US 4,717,278, US 5,096,321, US 4,963,046 and US 5,393,153.

The first mentioned publication discloses two different types of solutions. According to the first solution the cleansing medium is provided in a pressurized aerosol container which has to be pierced in order to bring the cleansing medium to the brush portion. According to the second solution a conventional hose pump is used in order to feed the cleansing medium into the feeding arm by means of which the cleansing medium is sprayed onto the brush portion from the outside. In toothbrushes of this type the cleansing medium is fed in quite an uncontrolled way which is unpleasant both for the user and the environment. Moreover it is difficult to use and clean the toothbrush. Additionally, the complex structure is easily damaged. The second publication discloses a pump device with a complex structure which not only makes the manufacturing costs high but also makes it difficult to use. The publication US 4,963,046 discloses several solutions using pressure membrane pumps arranged to a disengageable container portion or an arm portion. In the disclosed solutions the flow conduits are complicated and are easily clogged or the pumping effect is insufficient to open clogged-up conduits. The solution according to the publication US 5,393,153 discloses a pressure button and a piston pump which has a line of action that can cause an uncontrolled flow of cleansing medium. In addition, the disclosed structures are complex and expensive to manufacture.

Several solutions for connecting a toothbrush and a container containg a cleansing medium have been proposed. The disadvantage of the previously known solutions is usually complicated and costly structures. In most cases they have been lacking user-friendliness and reliability. The winding conduits full of a cleansing medium in a toothbrush which has not been used for a long time may have been so badly clogged that it is no longer possible to use the toothbrush according to its original purpose.

The object of the present invention is to remedy the aforementioned defects and to obtain a pump toothbrush which is simple to manufacture, reliable and easy and tidy to use. This object is achieved by means of the pump toothbrush according to the present invention which is characterized by what is disclosed in the enclosed claims.

The pump toothbrush according to the invention comprises a frame portion arranged between a container portion and an arm portion. The container portion, the frame portion and the arm portion form a congruent casing. The pump toothbrush according to the invention comprises only the three above mentioned portions which are easy to clean, service and replace. An adapting body is fitted into an advantageously cylindrical recess in the frame portion of the pump, said body containing the chamber and valves of the pressure membrane pump. The pressure membrane also acts as a sealing between the adapting body and the frame portion. The pipeline for the dental cleansing medium running from the container portion to the brush portion is essentially straight. An aerator valve is attached to the container portion for emptying it. The portions of the adapting body, the intermediate space and the valves are open previous to being fitted into the recess in the frame portion. The function of the pressure membrane can be intensified by mounting a spring into the expansion of the intermediate space.

The basic idea of the invention is that the structure and design of the pump toothbrush can be made almost as simple as those of an ordinary toothbrush, whereby it is possible in a natural manner to make use of the additional features it has compared to an ordinary toothbrush especially in connection with brushing. This is advantageously carried out so that the design and structure of the pump device is integrated between the grip portion containing the cleansing medium and the arm portion leading to the brush portion. In addition the activating means of the pump device, advantageously a flexible pressure membrane, is arranged in the region of the grip portion and arm portion, preferably in the surface of their casing. Thereby it is possible by a natural and light squeeze to feed the cleansing medium whenever need be to the bristles of the brush portion simultaneously with the brushing movement.

The simple pump device according to the invention can be easily adapted to toothbrushes of different sizes, whereby the size can be chosen according to different times of use which may, for example, be domestic use by adults or children, journeys or one-time use. The mutual fittings of the portions of the pump toothbrush according to the invention further this use.

Preferred embodiments of the invention are described in the dependent claims.

In the following a preferred embodiment of the invention will be described in detail with reference to the enclosed schematic drawing, in which
Figure 1 shows a perspective view of the pump toothbrush according to the invention, and
Figure 2 shows a section view illustrating the pump device.

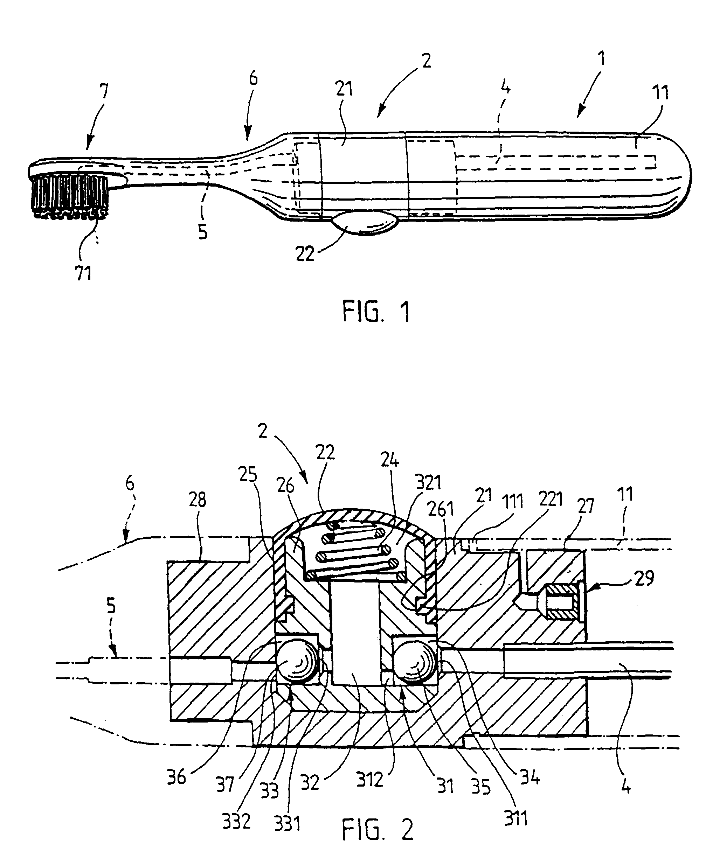

The pump toothbrush shown in figures 1 and 2 comprises a grip portion 1 with a container portion 11 for a cleansing medium. The grip portion 1, or the container portion 11, is attached to the other side of a frame portion 21 of a pump device 2, whereby an arm portion 6 is attached to the opposite side with respect to the grip portion of the frame portion of the pump device, said arm portion extending into a brush portion 7 provided with bristles 71. The grip portion 1, i.e. the container portion 11, the frame portion 21 of the pump device 2 and the arm portion 6 comprise essentially congruent casing portions.

A first duct, for example a hose or pipe 4 extending to the container portion 11 is connected to the pump device 2, said duct being connected by means of a first valve 31, an inlet valve, to an intermediate space 32 formed in an adapting body 26 of the pump device 2. Additionally a second duct, which can be, for example, a hose, conduit or pipe 5, is connected to the pump device 2 extending via the arm portion 6 to the brush portion 7, said duct being connected by a second valve 33, an outlet valve, to the intermediate space 32 from the opposite side with respect to the first pipe 4 of the frame portion 21. The pipeline formed by the pump device 2 and the pipes 4 and 5 does not contain any bends which facilitates transfer of the cleansing medium from the container portion 11 to the bristles 71.

The activating member of the pump device 2, i.e. the pressure membrane pump, typically consists of a pressure membrane 22 and a spring 24 by means of which a pressure or suction effect is obtained in the intermediate space 32 in order to transfer the cleansing medium from the container portion 1 to the brush portion 7. It is possible to fit a valve (not shown) in the bristles 71 of the brush portion 7 at the point where the pipe 5 conveying the cleansing medium opens, said valve allowing the cleansing medium to be conveyed to the bristles 71 but preventing, for example, water from getting into the pipe 5. When more solid and paste-like cleansing mediums are used the valve is not necessary. An aerator valve 29 is also arranged in the frame portion 21 and it is in connection with the surrounding space and the container portion 11 in order to balance the pressure in the container portion. The casing of the container portion 11 contains a valve opening 111 intended to settle at the aerator valve 29 when the container portion is attached to the frame portion 21.

The pressure membrane 22 consists of a flexible material whereby the return movement of the pressure membrane 22 after being pressed is secured by means of a spring member 24. The pressure membrane can also be made of a flexibly reversible material in which case the spring member is not needed.

In figure 2 a preferred structure of the pump device is shown in closer detail. The pump device 2, or the pressure membrane pump, comprises a frame portion 21. A cylindrical recess 25 is formed in the frame portion and a cylindrical adapting body 26 is fitted into said recess. An intermediate space 32 is formed essentially in the middle of the adapting body 26, whereby valve housings 34 and 36 comprised in the valves 31 and 33 are formed in the lower portion of the adapting body 26 on both sides of the intermediate space 32, and advantageously spherical unattached valve members 35 and 37 are arranged in said valve housings. The valve housings 34 and 36 are formed on the lower portion of the adapting body 26 on its outer circumference and they are open for mounting of the valve members 35 and 37 before being fitted into the recess 25. The valve housings 34 and 36 are closed when the adapting body 26 is fitted into the recess 25. The valve 31 forms an inlet valve connection, i.e. a connection to the pipe 4 leading to the container portion 11. The valve 33 forms an outlet valve connection, i.e. a connection via the arm portion 6 to the pipe 5 leading to the brush portion 7. The line leading from the container portion 11 to the bristles 71, which consists of the pump 2 and pipes 4 and 5, is almost straight in order to avoid clogging.

The pressure membrane 22 is dome-shaped, whereby it is arranged as a dome placed around the upper portion of the adapting body 26. In order to secure the fastening the pressure membrane 22 contains a projection 221 settling into the recess 261 in the adapting body. The pressure membrane can be attached to the adapting body in several ways, for example with a ring flange.

In the upper portion of the adapting body 26, as an extension to the intermediate space 32 is a stair-like expansion 321 in the region of the pressure membrane 22 to support the spring member 24 connected to the pressure membrane.

The frame portion 21 has an essentially cylindrical cross section. The frame portion 21 is provided with sliding surfaces 27 on the other side of the frame portion 21 in order to seal the attachment of the container portion 11 which is attached with an interference fitting. A corresponding arrangement including sliding surfaces 28 is provided also on the other side of the frame portion 21 to which the arm portion 6 is attached by means of an interference fitting. It is obvious that the mutual attachments of these portions can be carried out in some other way, for example, by means of a pipe thread.

When there is cleansing medium in the container portion 11 the pump toothbrush is used, for example, in the following way.

The membrane 22 of the pump device 2 is pressed downwards whereby a pressure effect is achieved in the intermediate space 32. Hereby the spherical valve member 35 is pressed against the interconnector 311 leading to the pipe 4 and closes the valve 31. When the pressure membrane 22 is released it is reversed to its original position, whereby a suction effect is provided in the intermediate space 32 opening the interconnector 311 whereby cleansing medium is sucked from the container portion 11 into the intermediate space 32 via the pipe 4 and the open interconnectors 311 and 312.

The pressure membrane 22 is pressed again whereby the valve member 35 is once more pressed against the interconnector 311 closing the valve 31 and opening the valve 33 when the valve member 37 extends out from the interconnector 331 leading out from the intermediate space 32. The interconnector 332 leading to the pipe 5 remains open at this stage and the cleansing medium can flow through the pipe 5 to the brush portion 7 and the bristles 71.

Thus it is possible to regulate by a simple pressing movement the feeding of the cleansing medium to the bristles 71 of the brush portion 7.

The cross section of the casing portion of the pump toothbrush, i.e. in practice the grip portion/container portion, the pump device/frame portion and the arm portion, can be of some other shape than cylindrical. The recess in the frame portion and the adapting body fitted into it do not have to be cylindrical, instead they can, for example, be polygonal or the like.

The container portion is advantageously made of a transparent material in order to facilitate monitoring of the amount of cleansing medium.

Additionally the container portion can be provided with filling means facilitating the refilling of it.

The pressure membrane may, for example, be round or elliptic, preferably it should, however, adjust to the form of the casing of the pump toothbrush. The location of the pressure membrane can be chosen according to respective use. There can also be more than one pressure membrane, for example two pressure membranes arranged on opposite sides of the pump toothbrush.

The spherical valve members may be replaced with, for example, spring-acting balls or spheres, clap valve members or other solutions operating in a similar way.

The pump toothbrush may be provided with a cover in order to protect the brush portion, preferably one which is congruent with the shape of the casing of the pump toothbrush.

The drawing and the description relating to it are only intended to illustrate the inventive idea. The pump toothbrush according to the invention may vary within the scope of the enclosed claims.

## Claims

1. A pump toothbrush comprising a brush portion (7), a grip portion (1) and an intermediate arm portion (6), whereby the grip portion (1) comprises a container portion (11) for a dental cleansing medium, said container portion (11) being connected with the brush portion (7) by means of a pump device (2) in order to feed the dental cleansing medium into the brush portion (7) through the arm portion (6),
**characterized** in that
- the pump device (2) comprises a frame portion (21) arranged between the container portion (11) and the arm portion (6) in such a way that the casings of the container portion (11), the frame portion (21) and the arm portion (6) form an essentially congruent casing surface,
- the frame portion (21) comprises a generally cylindrical recess (25) located perpendicularly with respect to the longitudinal axis of the pump toothbrush,
- a generally cylindrical adapting body (26) forming the inner portion of the pump device (2) is fitted into the recess (25), said body comprising an axial outwards open intermediate space (32) acting as a chamber of the pump, said space being closed by a flexible pressure membrane (22) arranged in the plane of the casing of the frame portion (21) and forming the sealing between the adapting body (26) and the frame portion (21),
- inlet and outlet valves (31, 33) are arranged in the bottom of the adapting body (26) opposite the pressure membrane (22) and the intermediate space (32) is through these connected to the container portion (11) and the brush portion (7).

2. A pump toothbrush according to claim 1,
**characterized** in that the pump device comprises a pressure membrane pump (2) and the intermediate space (32) of the adapting body (26) fitted into its frame portion (21), the inlet valve connection (31, 34, 35) connected to the container portion (11) by an interconnector (311), the outlet valve connection (33, 36, 37) connected to the brush portion (7) by means of the interconnector (332) and the pipes (4 and 5) form an essentially straight pipeline for the dental cleansing medium from the container portion (11) to the brush portion (7).

3. A pump toothbrush according to claims 1 to 2,
**characterized** in that the frame portion (21) comprises an aerator valve (29) which is in connection with the surrounding space and the container portion (11) .

4. A pump toothbrush according to claims 1 to 2,
**characterized** in that valve housings (34 and 36) are formed on the lower portion of the adapting body (26) and they are open towards the cylindrical circumference of the adapting body (26) in order for the unattached valve members (35 and 37) to be placed in them before the adapting body (26) is fitted into the recess (25) in such a way that the valve housings (34 and 36) are closed by the outer casing of the recess (25), said housings being located at the interconnectors (311 and 332) in the frame portion (21).

5. A pump toothbrush according to claims 1 to 2,
**characterized** in that a spring (24) is connected to the flexible pressure membrane (22), said spring being arranged to function and increase the efficiency of the pressure membrane (22) in the intermediate space (32) in the stair-like expansion (321) under the pressure membrane (22).

6. A pump toothbrush according to claims 1 to 2,
**characterized** in that the pressure membrane (22) is made of a flexibly reversible material.

7. A pump toothbrush according to claims 1 to 2,
**characterized** in that the arm portion (6) and the container portion (11) are arranged to be attached to the frame portion (21) by means of an interference fitting provided with slidig surfaces (27, 28).

8. A pump toothbrush according to claims 1 to 2,
**characterized** in that the arm portion and the container portion are arranged to be attached to the frame portion by means of a pipe thread.

9. A pump toothbrush according to claims 1 to 2,
**characterized** in that the casings of the end of the arm portion (6) located towards the frame portion (21), the frame portion (21) and the container portion (11) are essentially cylindrical and that the flexible pressure membrane (22) of the pump device (2) is, for example, round or elliptic so that it adjusts to the form of the congruent casing portions of the arm portion, the frame portion and the container portion.

10. A pump toothbrush according to claims 1 to 2,
**characterized** in that the container portion (11) has a refillable structure.

## Patentansprüche

1. Pumpen-Zahnbürste,
umfassend einen Bürstenabschnitt (7), einen Griffabschnitt (1) und einen Zwischenarmabschnitt (6), wobei der Griffabschnitt (1) einen Behälterabschnitt (11) für ein Zahnreinigungsmittel umfaßt,
wobei der Behälterabschnitt (11) über eine Pumpenanordnung (2) mit dem Bürstenabschnitt (7) verbunden ist, um das Zahnreinigungsmittel durch den Armabschnitt (6) in den Bürstenabschnitt (7) zu leiten,
dadurch **gekennzeichnet,**
- daß die Pumpenanordnung (2) einen derart zwischen dem Behälterabschnitt (11) und dem Armabschnitt (6) angeordneten Rahmenabschnitt (21) umfaßt, daß die Gehäuse des Behälterabschnitts (11), des Rahmenabschnitts (21) und des Armabschnitts (6) eine im wesentlichen kongruente Gehäuseoberfläche bilden,
- daß der Rahmenabschnitt (21) eine im allgemeinen zylinderförmige Aussparung (25) umfaßt, die senkrecht zur Längsachse der Pumpen-Zahnbürste angeordnet ist,
- daß ein den Innenabschnitt der Pumpenanordnung (2) bildender, im allgemeinen zylinderförmiger Anpaßkörper (26) in die Aussparung (25) eingepaßt ist, wobei der Körper einen axial nach außen offenen Zwischenraum (32) umfaßt, der als Kammer der Pumpe dient, wobei der Raum durch eine flexible Druckmembran (22) verschlossen ist, die in der Ebene des Gehäuses des Rahmenabschnitts (21) angeordnet ist und die Abdichtung zwischen dem Anpaßkörper (26) und dem Rahmenabschnitt (21) bildet,
- daß im Boden des Anpaßkörpers (26) gegenüberliegend zu der Druckmembran (22) Einlaß- und Auslaßventile (31, 33) angeordnet sind, wobei der Zwischenraum (32) durch diese mit dem Behälterabschnitt (11) und dem Bürstenabschnitt (7) verbunden ist.

2. Pumpen-Zahnbürste nach Anspruch 1,
dadurch **gekennzeichnet,**
daß die Pumpenanordnung eine Druckmembranpumpe (2) umfaßt und der Zwischenraum (32) des in ihren Rahmenabschnitt (21) eingepaßten Anpaßkörpers (26), die über einen Zwischenverbinder (311) mit dem Behälterabschnitt (11) verbundene EinlaßVentilverbindung (31, 34, 35), die über den Zwischenverbinder (332) mit dem Bürstenabschnitt (7) verbundene Auslaß-Ventilverbindung (33, 36, 37) und die Rohre (4 und 5) eine im wesentlichen gerade Rohrleitung für das Zahnreinigungsmittel von dem Behälterabschnitt (11) zu dem Bürstenabschnitt (7) bilden.

3. Pumpen-Zahnbürste nach Anspruch 1 oder 2
dadurch **gekennzeichnet,**
daß der Rahmenabschnitt (21) ein mit der Umgebung und dem Behälterabschnitt (11) in Verbindung stehendes Belüftungsventil (29) umfaßt.

4. Pumpen-Zahnbürste nach Anspruch 1 oder 2,
dadurch **gekennzeichnet,**
daß im unteren Abschnitt des Anpaßkörpers (26) Ventilgehäuse (34 und 36) ausgebildet sind, die zu dem zylinderförmigen Umfang des Anpaßkörpers (26) hin offen sind, damit die unbefestigten Ventilteile (35 und 37) in diese eingesetzt werden können, ehe der Anpaßkörper (26) in die Aussparung (25) derart eingepaßt wird, daß die Ventilgehäuse (34 und 36) durch das Außengehäuse der Aussparung (25) verschlossen werden, wobei die Gehäuse in dem Rahmenabschnitt (21) bei den Zwischenverbindern (311 und 332) angeordnet sind.

5. Pumpen-Zahnbürste nach Anspruch 1 oder 2,
dadurch **gekennzeichnet,**
daß mit der flexiblen Druckmembran (22) eine Feder (24) verbunden ist, wobei die Feder in dem Zwischenraum (32) in der stufenartigen Aufweitung (321) unter der Druckmembran (22) angeordnet ist, um die Wirkung der Druckmembran (22) hervorzurufen und zu erhöhen.

6. Pumpen-Zahnbürste nach Anspruch 1 oder 2,
dadurch **gekennzeichnet,**
daß die Druckmembran (22) aus einem flexibel reversiblen Material gefertigt ist.

7. Pumpen-Zahnbürste nach Anspruch 1 oder 2,
dadurch **gekennzeichnet,**
daß der Armabschnitt (6) und der Behälterabschnitt (11) derart ausgestaltet sind, daß sie über einen mit Gleitflächen (27, 28) versehenen Preßsitz an dem Rahmenabschnitt (21) angebracht sind.

8. Pumpen-Zahnbürste nach Anspruch 1 oder 2,
dadurch **gekennzeichnet,**
daß der Armabschnitt und der Behälterabschnitt derart ausgestaltet sind, daß sie über ein Rohrgewinde an dem Rahmenabschnitt angebracht sind.

9. Pumpen-Zahnbürste nach Anspruch 1 oder 2,
dadurch **gekennzeichnet,**
daß die Gehäuse des zum Rahmenabschnitt (21) hin gerichteten Endes des Armabschnitts (6), des Rahmenabschnitts (21) und des Behälterabschnitts (11) im wesentlichen zylinderförmig sind und daß die flexible Druckmembran (22) der Pumpenanordnung (2) beispielsweise rund oder elliptisch ist, so daß sie sich an die Form der kongruenten Gehäuseabschnitte des Armabschnitts, des Rahmenabschnitts und des Behälterabschnitts anpaßt.

10. Pumpen-Zahnbürste nach Anspruch 1 oder 2,
dadurch **gekennzeichnet,**
daß der Behälterabschnitt (11) eine wiederauffüllbare Struktur aufweist.

## Revendications

1. Brosse à dents à pompe comportant une partie de brosse (7), une partie de poignée (1) et une partie de bras intermédiaire (6), la partie de poignée (1) comportant une partie de conteneur (11) pour un produit de nettoyage dentaire, ladite partie de conteneur (11) étant reliée à la partie de brosse (7) au moyen d'un dispositif de pompe (2) afin de délivrer le produit de nettoyage dentaire dans la partie de brosse (7) par l'intermédiaire de la partie de bras (6), **caractérisée en ce que :**
- le dispositif de pompe (2) comporte une partie de châssis (21) disposée entre la partie de conteneur (11) et la partie de bras (6) de telle façon que les enveloppes de la partie de conteneur (11), de la partie de châssis (21) et de la partie de bras (6) forment une surface de châssis sensiblement congruente,
- la partie de châssis (21) comporte une cavité généralement cylindrique (25) disposée perpendiculairement à l'axe longitudinal de la brosse à dents à pompe,
- un corps d'adaptation généralement cylindrique (26) formant la partie intérieure du dispositif à pompe (2) est ajusté dans la cavité (25), ledit corps comportant un espace intermédiaire axial ouvert vers l'extérieur (32) agissant en tant que chambre de la pompe, ledit espace étant fermé par une membrane flexible sensible à la pression (22) disposée dans le plan du châssis de la partie de châssis (21) et formant l'étanchéité entre le corps d'adaptation (26) et la partie de châssis (21),
- des valves d'entrée et de sortie (31, 33) sont disposées au fond du corps d'adaptation (26), à l'opposé de la membrane sensible à la pression (22) et l'espace intermédiaire (32) est relié par ces valves à la partie de conteneur (11) et à la partie de brosse (7).

2. Brosse à dents à pompe selon la revendication 1, **caractérisée en ce que** le dispositif de pompe comporte une pompe à membrane sensible à la pression (2) et l'espace intermédiaire (32) du corps d'adaptation (26) ajusté dans sa partie de châssis (21), la liaison de valve d'entrée (31, 34, 35) reliée à la partie de conteneur (11) par un raccord (311), la liaison de valve de sortie (33, 36, 37) reliée à la partie de brosse (7) au moyen d'un raccord (332) et les tuyaux (4 et 5) forment un conduit tubulaire sensiblement droit pour le produit de nettoyage dentaire depuis la partie de conteneur (11) jusqu'à la partie de brosse (7).

3. Brosse à dents à pompe selon les revendications 1 ou 2, **caractérisée en ce que** la partie de châssis (21) comporte une valve d'aérateur (29) reliée à l'espace environnant et à la partie de conteneur (11).

4. Brosse à dents à pompe selon les revendications 1 ou 2, **caractérisée en ce que** des logements de valve (34 et 36) sont formés sur la partie inférieure du corps d'adaptation (26) et ils sont ouverts vers la circonférence cylindrique du corps d'adaptation (26) afin de placer dans ceux-ci les organes de valve non fixés (35 et 37) avant que le corps d'adaptation (26) ne soit ajusté dans la cavité (25) de telle façon que les logements de valve (34 et 36) soient fermés par l'enveloppe extérieure de la cavité (25), lesdits logements étant disposés au niveau des raccords (311 et 332) dans la partie de châssis (21).

5. Brosse à dents à pompe selon les revendications 1 ou 2, **caractérisée en ce qu'**un ressort (24) est relié à la membrane flexible sensible à la pression (22), ledit ressort étant disposé pour agir en augmentant l'efficacité de la membrane sensible à la pression (22) dans l'espace intermédiaire (32) dans l'extension analogue à un escalier (321) sous la membrane sensible à la pression (22).

6. Brosse à dents à pompe selon les revendications 1 ou 2, **caractérisée en ce que** la membrane sensible à la pression (22) est faite en un matériau élastiquement réversible.

7. Brosse à dents à pompe selon les revendications 1 ou 2, **caractérisée en ce que** la partie de bras (6) et la partie de conteneur (11) sont disposées pour être fixées à la partie de châssis (21) au moyen d'un ajustement serré procuré par les surfaces de glissement (27, 28).

8. Brosse à dents à pompe selon les revendications 1 ou 2, **caractérisée en ce que** la partie de bras et la partie de conteneur sont disposées pour être fixées à la partie de châssis au moyen d'un filetage tubulaire.

9. Brosse à dents à pompe selon les revendications 1 ou 2, **caractérisée en ce que** les enveloppes de l'extrémité de la partie de bras (6) disposée vers la partie de châssis (21), de la partie de châssis (21) et de la partie de conteneur (11) sont sensiblement cylindriques et en ce que la membrane flexible sensible à la pression (22) du dispositif de pompe (2) est, par exemple, ronde ou elliptique afin qu'elle s'ajuste à la forme des parties d'enveloppe congruentes de la partie de bras, de la partie de châssis et de la partie de conteneur.

10. Brosse à dents à pompe selon les revendications 1 ou 2, **caractérisée en ce que** la partie de conteneur (11) possède une structure remplissable.
